# EUROPÄISCHE PATENTSCHRIFT

(11) **EP 2 998 249 B1**
(45) Veröffentlichungstag und Bekanntmachung des Hinweises auf die Patenterteilung: **20.06.2018**
(21) Anmeldenummer: 14185396.0
(22) Anmeldetag: 18.09.2014
(51) Int. Cl.: B65G 47/84

(54) **Fördervorrichtung zur Beförderung von Gegenständen**
Conveyor device for conveying objects
Dispositif de convoyage pour le convoyage d'objets

(43) Veröffentlichungstag der Anmeldung: 23.03.2016
(73) Patentinhaber: Dematic Logistics GmbH, 33609 Bielefeld (DE)
(72) Erfinder: Otto, Thomas, 33659 Bielefeld (DE)
(74) Vertreter: Kleine, Hubertus

(56) Entgegenhaltungen:
- WO-A1-00/02802
- WO-A1-00/32502
- DE-A1- 19 959 843
- ES-A1- 2 381 832
- US-A1- 2005 077 144

## Beschreibung

Die vorliegende Erfindung betrifft eine Fördervorrichtung zur Beförderung von Gegenständen gemäß dem Oberbegriff des Anspruchs 1.

Derartige Fördervorrichtungen werden insbesondere bei der Beförderung von Paketen oder anderen Gegenständen eingesetzt, die auf jeweiligen Ablagetischen der Fördervorrichtung aufliegen und entlang einer Förderstrecke bis zu einer Entladestation auf den Ablagetischen transportiert werden. Sobald die Entladestation erreicht ist, dient ein senkrecht zur Förderrichtung an den jeweiligen Ablagetischen bewegbarer Schieber dazu, den zu befördernden Gegenstand vom Ablagetisch herunter zur Entladestation zu schieben.

Solche Fördervorrichtungen sind beispielsweise aus der DE 199 59 843 A1, der EP 2 159 174 B1 oder der ES 2 381 832 A1 bekannt.

Während bei der Fördervorrichtung gemäß DE 199 59 843 A1, das die technischen Merkmale des Oberbegriffs des Anspruchs 1 offenbart, die Kapazität einer solchen Fördervorrichtung durch die Breite der einzelnen Ablagetische eingeschränkt ist, sind gemäß der EP 2 159 174 B1 an jedem der Ablagetische zwei Schieber angeordnet, so dass auf einem solchen Tisch wahlweise ein größerer Gegenstand oder auch zwei kleinere Gegenstände transportiert werden können, die von den jeweiligen Schiebern separat herunter geschoben werden können, was jedoch mit dem Nachteil einhergeht, dass bedingt durch die Länge der einzelnen Ablagetische in Förderrichtung Kurvenabschnitte der Förderstrecke mit relativ großem Krümmungsradius ausgebildet sein müssen.

Aus der WO 00/02802 A1 ist ein Förderer zum Transport von Gegenständen unterschiedlicher Größen bekannt, bei dem zwei benachbarte Ablagetische über eine unterhalb der Ablagetische angeordneten Stange miteinander verbunden sind, die in dafür vorgesehenen Lagerbuchsen an jedem der Tische so aufgenommen ist, dass sowohl eine Schwenkbewegung der Ablagetische um eine zur Transportrichtung parallelen Schwenkachse sowie eine Relativbewegung der Ablagetische in Transportrichtung ermöglicht ist.

Aufgabe der vorliegenden Erfindung ist es, eine Fördervorrichtung zur Beförderung von Gegenständen bereitzustellen, die sowohl eine hohe Kapazität als auch Kurven der Förderstrecke mit vergleichsweise kleinem Krümmungsradius zu durchfahren vermag.

Diese Aufgabe wird durch eine Fördervorrichtung mit den Merkmalen des Anspruchs 1 gelöst.

Die erfindungsgemäße Fördervorrichtung zur Beförderung von Gegenständen weist mehrere Ablagetische auf, auf die die zu befördernden Gegenstände auflegbar sind. Des Weiteren weist sie eine Schienenanordnung mit einer ersten Schienenbahn und einer parallel zu dieser verlaufenden zweiten Schienenbahn auf, entlang der die Ablagetische verfahrbar angeordnet sind. Die Ablagetische sind dabei auf der ersten Schienenbahn gleitend oder rollend gelagert. In der zweiten Schienenbahn sind Koppelelemente geführt, die mit einer Antriebseinrichtung, beispielsweise in Gestalt eines reibfreien Antriebs, antreibbar sind. An diesen Koppelelementen sind die Ablagetische befestigt. Jeder der Ablagetische weist einen quer zur Bewegungsrichtung der Ablagetische bewegbaren Schieber auf, mit dem die zu befördernden Gegenstände von dem jeweiligen Ablagetisch herunterschiebbar sind. Erfindungsgemäß sind an jedem dieser Koppelelemente wenigstens zwei der Ablagetische elastisch befestigt, wobei die Koppelelemente und die Ablagetische über elastisch verformbare Verbindungselemente miteinander verbunden sind und wobei die Verbindungselemente zwei durch einen aus einem elastischen Material gebildeten Puffer miteinander verbundene Bolzen aufweisen, die in jeweiligen Bohrungen der Ablagetische und der Koppelelemente gehalten sind.

Dadurch ist ermöglicht, dass auch Gegenstände wie Pakete oder dergleichen mit einer Längserstreckung, die die Breite der Ablagetische in Förderrichtung übersteigt, mit einer solchen Fördervorrichtung transportierbar sind.

Durch die elastischen Verbindungselemente ist ermöglicht, dass die Ablagetische bei Bedarf aus der horizontalen Ebene herausbewegbar sind und so beispielsweise im Bereich einer Kurve der Beförderungsstrecke durch eine Erhöhung der ersten Schienenbahn leicht angehoben werden können. Dies erlaubt, die Geschwindigkeit der Tische entlang der Förderstrecke anzuheben, ohne Gefahr zu laufen, dass auf den Tischen beförderte Gegenstände im Kurvenbereich von den Tischen zentrifugalkraftbedingt herabrutschen.

Vorteilhafte Ausführungsvarianten der Fördervorrichtung sind Gegenstand der Unteransprüche.

Gemäß einer vorteilhaften Ausführungsvariante der Erfindung weist jedes der Koppelelemente ein an der zweiten Schienenbahn verfahrbar gehaltenes Halteteil auf, an dem wenigstens zwei der Ablagetische befestigt sind.

So ist gemäß einer weiteren bevorzugten Ausführungsvariante der erfindungsgemäßen Fördervorrichtung die erste Schienenbahn im Bereich einer Kurve der Schienenanordnung als Außenbahn mit größerem Krümmungsradius als der Krümmungsradius der als Innenbahn ausgebildeten zweiten Schienenbahn ausgebildet. Eine Auflagefläche der ersten Schienenbahn ist dabei im Bereich der Kurve gegenüber einem geradlinigen Förderstreckenbereich überhöht ausgebildet.

Denkbar wäre prinzipiell auch anstelle der Erhöhung der ersten Schienenbahn eine Absenkung der zweiten Schienenbahn.

Zum Antreiben der Tische entlang der Förderstrecke weist gemäß einer weiteren bevorzugten Ausführungsvariante jedes der Koppelelemente Andruckflächen auf, die an die elektrisch angetriebene Reibrollen zum Antrieb der Koppelelemente andrückbar sind. Diese Andruckflächen sind dabei bevorzugt an unterhalb des Halteteils befestigten oder angeformten Stegen ausgebildet, wobei die Andruckflächen sich vertikal und parallel zur Förderrichtung erstrecken.

Mithilfe solcher an den Koppelelementen angebrachten Stegen ist in einfacher Weise ermöglicht, die elektrisch angetriebenen Reibrollen unterhalb der Auflageebene der Ablagetische anzuordnen.

Nach einer weiteren bevorzugten Ausführungsvariante der erfindungsgemäßen Fördervorrichtung ist ein Spalt zwischen einander benachbarten Rändern zweier an einem der Koppelelemente befestigten Ablagetische durch eine zumindest an einem der Ränder angeordnete Schutzabdeckung zumindest teilweise verdeckt.

Dies hat den Vorteil, dass einerseits keine auf dem Ablagetisch aufgelegten Gegenstände von der Oberfläche des Ablagetisches durch diesen Spalt hindurchrutschen können. Die Schutzabdeckung ist bevorzugt als Bürste ausgebildet, wobei besonders bevorzugt an beiden einander benachbarten Rändern der an einem der Koppelelemente befestigten Ablagetisch eine solche Bürste angebracht ist.

Um zwischen den einzelnen Koppelelementen, an denen die Ablagetische befestigt sind, einen vorbestimmten Abstand zu gewährleisten, ist gemäß einer weiteren vorteilhaften Ausführungsvariante zwischen benachbarten Koppelelementen mit daran befestigten Ablagetischen jeweils mindestens ein Abstandselement in der zweiten Schienenbahn angeordnet.

Gemäß einer weiteren bevorzugten Ausführungsvariante der erfindungsgemäßen Fördervorrichtung weist jedes der Koppelelemente wenigstens ein Führungselement mit in jeweiligen Bahnen eines Hohlprofils der zweiten Schienenbahn geführten Laufrädern und Führungsrädern auf.

Das Führungselement besteht dabei vorzugsweise aus einem Kopfteil mit einem ersten Lagergehäuse, an dem die Laufräder und Führungsräder drehbar gelagert sind, und einem um einen Winkel α kippbar an dem Kopfteil angeordnetes Fußteil mit einem zweiten Lagergehäuse, an dem die Führungsräder drehbar gelagert sind und an dem sich ein Führungsbolzen von einer dem Kopfteil abgewandten Unterseite nach unten erstreckt, an dem das Halteteil befestigt ist.

Auch durch die Ausbildung des Führungselementes ist in einfacher Weise ein Kippen der Ablagetische im Bereich der Kurve der ersten Schienenbahn ermöglicht.

Nachfolgend werden Ausführungsbeispiele der Erfindung anhand der beiliegenden Zeichnungen näher erläutert. Es zeigen:

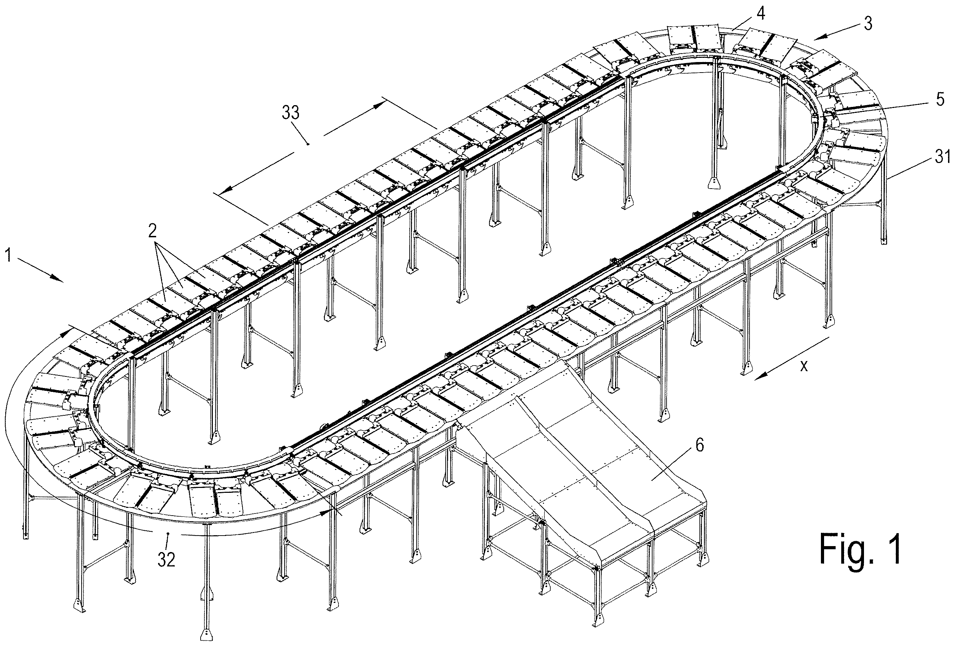

- Figur 1: eine perspektivische Ansicht einer Ausführungsvariante einer erfindungsgemäßen Fördervorrichtung,
- Figuren 2 und 3: jeweilige perspektivische Ansichten von an einem Koppelelement befestigten Ablagetischen,
- Figur 4: eine teilweise Explosionsdarstellung der Ablagetische und des Koppelelements und eines Ablageelements,
- Figuren 5a und 5b: zwei an einem der Koppelelemente befestigbare Tische mit dazwischen angeordneter Schutzabdeckung im auseinandergenommenen bzw. im zusammengesetzten Zustand,

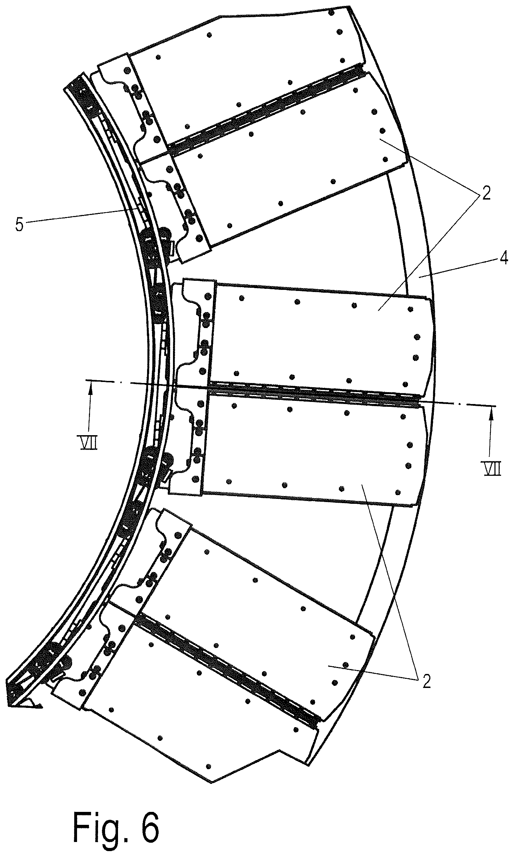

- Figur 6: eine Draufsicht auf einen Kurvenausschnitt der in Figur 1 gezeigten Fördervorrichtung,
- Figur 7: eine Schnittansicht durch die in Figur 6 mit VII bezeichnete Schnittebene,
- Figur 8: eine Detailansicht des in Figur 7 mit VIII bezeichneten Ausschnitts der Fördervorrichtung,
- Figur 9: eine perspektivische Ansicht einer Ausführungsvariante eines die Ablagetische mit dem Koppelelement verbindenden Verbindungselement,
- Figur 10a: eine perspektivische Ansicht einer Ausführungsvariante eines Koppelelements und ,
- Figur 10b: eine Ansicht von vorne auf die in Figur 10a gezeigte Ausführungsvariante des Koppelelements.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Fördervorrichtung, des Ablagetisches, des Koppelelementes, der Schienenbahn, der Stege und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

In der Figur ist mit dem Bezugszeichen 1 insgesamt eine Ausführungsvariante einer erfindungsgemäßen Fördervorrichtung bezeichnet. Die Fördervorrichtung 1 weist dabei eine Vielzahl von Ablagetischen 2 auf, auf die zu befördernde Gegenstände an einer hier nicht dargestellten Beladestation aufgelegt werden.

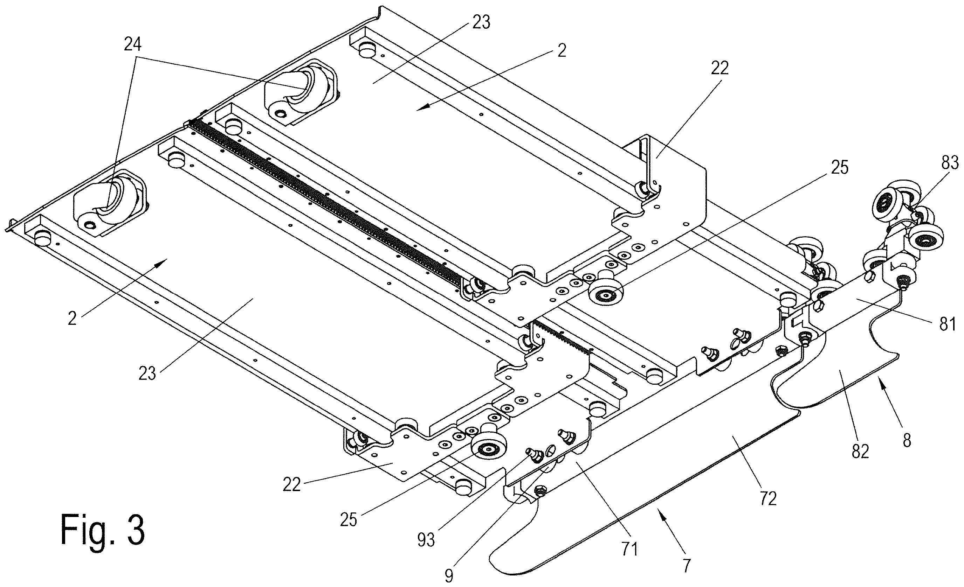

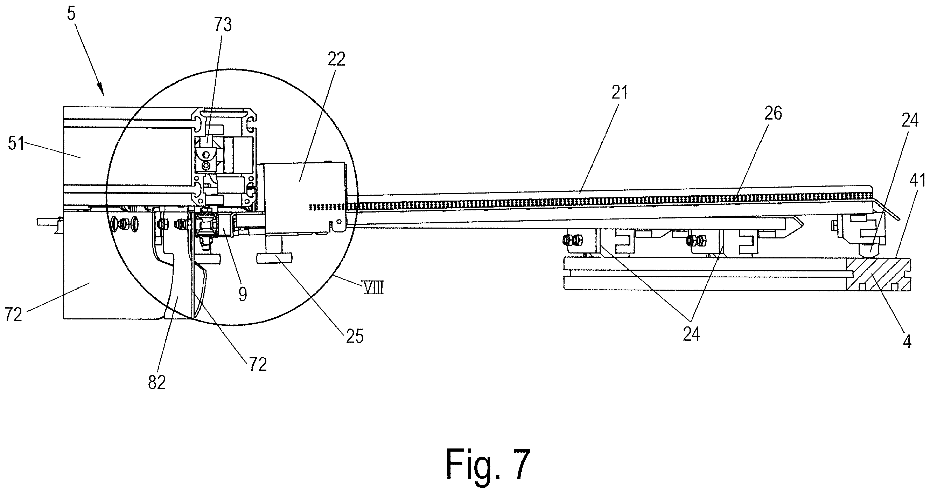

Die Ablagetische 2 sind dabei entlang einer Schienenanordnung 3 mit einer ersten Schienenbahn 4 und einer parallel zu dieser verlaufenden zweiten Schienenbahn 5 verfahrbar. Die hier als Außenbahn ausgelegte erste Schienenbahn 4 und die als Innenbahn ausgelegte zweite Schienenbahn 5 sind dabei auf einem Gestell 31 montiert. Die erste Schienenbahn 4 besteht dabei im Wesentlichen aus einer Schienenleiste 41 mit einer Auflagefläche, auf der an der Unterseite 23 der Ablagetische 2 angeordnete Rollen 24, gezeigt in den Figuren 3 und 7, aufliegen.

Die zweite Schienenbahn 5 besteht im Wesentlichen aus einem Schienenprofil 51 mit mehreren Laufbahnen 52 zur Aufnahme von Laufrädern 732 bzw. Führungsrädern 731, 733 eines Koppelelementes 7, das über diese Laufräder 732 und Führungsräder 731, 733 in der zweiten Schienenbahn 5 verfahrbar ist.

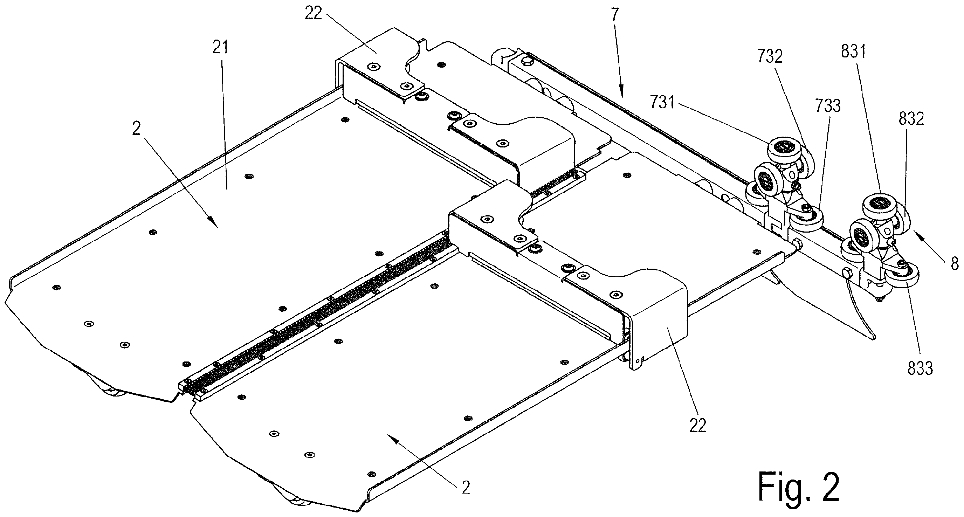

Das in den Figuren 2, 3, 4 und 8 gezeigte Koppelelement 7 dient dabei zur Befestigung der Ablagetische 2 und somit zur Verbindung der Ablagetische 2 mit der zweiten Schienenbahn 5. Wie in den Figuren 2-4 gut zu erkennen ist, sind dabei in jedem der Koppelelemente 7 wenigstens zwei der Ablagetische 2 befestigt. Denkbar ist auch die Befestigung von beispielsweise drei oder mehr Ablagetischen 2, die zum Transport einer entsprechenden Anzahl von Gegenständen geeignet sind. Wichtig ist, die Länge des Koppelelements 7 nicht zu groß zu gestalten, um Kurvenfahrten nicht zu behindern.

Jeder der Ablagetische 2 weist dabei einen quer zur Bewegungsrichtung x der Ablagetische 2 bewegbaren Schieber 22 auf, mit dem die zu befördernden Gegenstände von dem jeweiligen Ablagetisch 2 herunterschiebbar sind.

Die Schieber 22 sind dabei, wie in den Figuren 2-4 zu erkennen ist, in senkrecht zur Förderrichtung x verlaufenden Außenkanten der Ablagetische 2 geführt und werden über ein unterhalb der Auflagefläche der Ablagetische 2 am Schieber 22 angeordnetes Führungsrad 25, das im Bereich einer Entladestation 6 in einer an der Schienenanordnung 3 angeordneten weiteren Führungsschiene (nicht dargestellt) von einer Position nahe der zweiten Schienenbahn 5 in eine Position nahe der ersten Schienenbahn 4 bewegt.

Zur Führung der Schieber 22 entlang des jeweiligen Ablagetisches 2 sind des Weiteren auf der Unterseite des Ablagetisches 2 jeweilige Führungsschienen befestigt, entlang der der Schieber 22 quer zur Bewegungsrichtung x der Ablagetische 2 verschiebbar ist.

Die Koppelelemente 7, an denen die Ablagetische 2 befestigt sind, weisen ein an der zweiten Schienenbahn 5 verfahrbar gehaltenes Halteteil 71, bevorzugt in Gestalt eines Rohrprofils oder Rechteckprofils, auf.

An einem in Förderrichtung x hinteren Ende jedes der Halteteile 71 ist ein Führungselement 73 befestigt, das in das Hohlprofil der zweiten Schienenbahn 5 reicht.

Dieses Führungselement 73 besteht dabei im Wesentlichen aus einem Haltekörper mit den daran befestigten weiter oben bereits erwähnten Laufrädern 732 und Führungsrädern 731, 733, die in den jeweiligen Bahnen des Hohlprofils der zweiten Schienenbahn 5 geführt sind.

Die Befestigung der Ablagetische 2 mit dem jeweiligen Halteteil 71 des Koppelelements 7 erfolgt bevorzugt elastisch. Dazu sind elastisch verformbare Verbindungselemente 9 vorgesehen, über die jeweils zwei der Ablagetische 2 mit einem der Koppelelemente 7 elastisch miteinander verbunden sind.

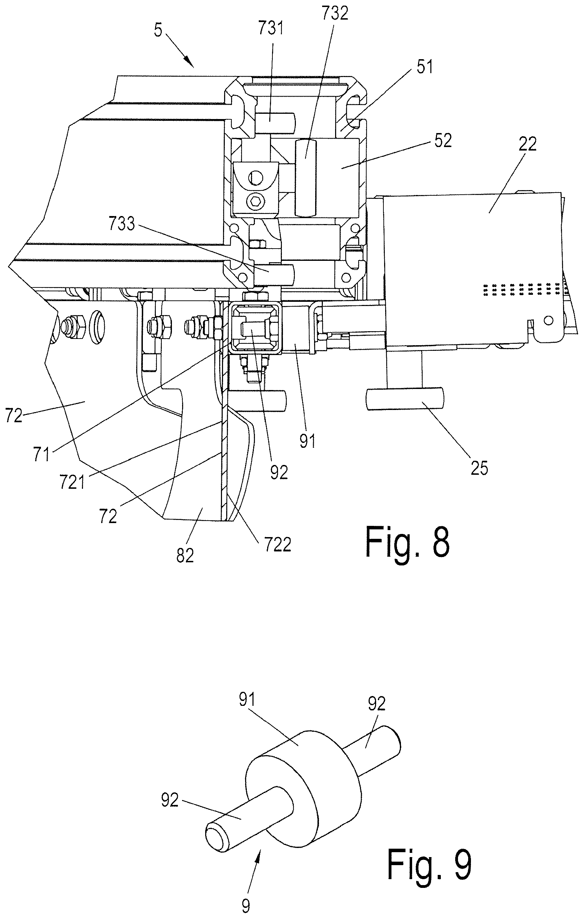

Eine bevorzugte Ausführungsvariante eines solchen Verbindungselementes 9 ist in Figur 9 dargestellt. Das Verbindungselement 9 besteht dabei aus einem aus einem elastischen Material wie beispielsweise Gummi gebildeten Puffer 91 mit bevorzugt zylindrischer Gestalt, in dem auf beiden Grundflächen jeweilige Bolzen 92 gehalten sind, die in jeweilige Bohrung 74 der Ablagetische 2 und der Koppelelemente 7gehalten sind.

Die Grundflächen des Puffers 91 liegen im montierten Zustand an den Seitenflächen des Halteteils 71 und einer stirnseitigen Abkantung der Ablagetische 2 an, so dass die Ablagetische 2 im Bedarfsfall senkrecht zur Förderrichtung x der Ablagetische 2 verschwenkbar sind. Damit wird ermöglicht, dass die Ablagetische 2 im Bereich von Kurvenstücken 32 der Fördervorrichtung 1 zum Kurveninneren geneigt am jeweiligen Koppelelement 7 führbar sind und im Bereich eines geradlinigen Förderstreckenbereichs 33 der Schienenanordnung 3 horizontal geführt sind.

Alternativ zur elastischen Befestigung der Ablagetische 2 mit dem jeweiligen Halteteil 71 des Koppelelements 7 oder zusätzlich ist die Neigung der Ablagetische 2 im Bereich von Kurvenstücken 32 der Fördervorrichtung 1 durch die Bauweise des Führungselementes 73 ermöglicht.

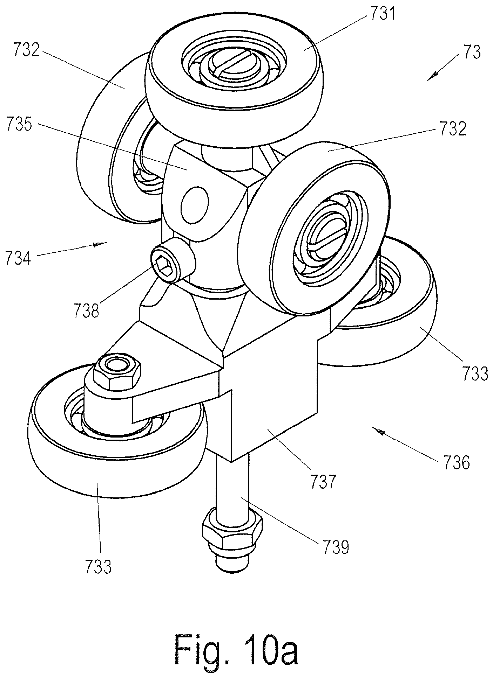

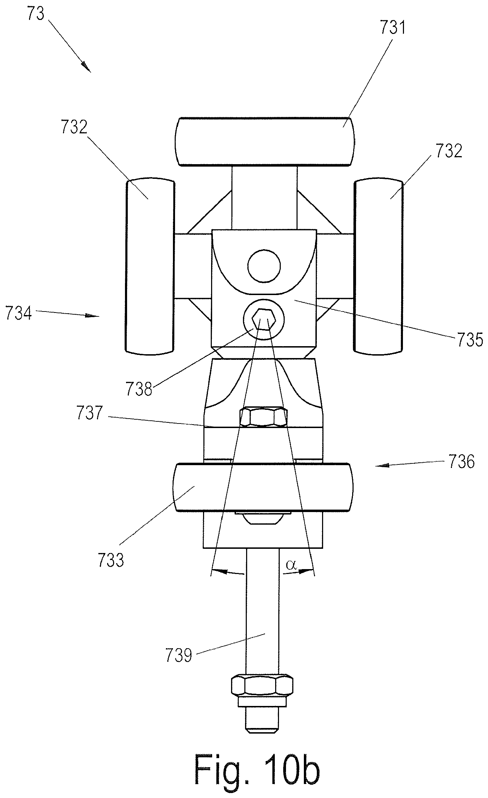

Dabei ist das Führungselement 73 in einer in den Figuren 10a und 10b gezeigten Ausführungsvariante derart beschaffen, das ein Kopfteil 734 des Führungselementes 73, bestehend aus den Laufrädern 732 und Führungsrädern 731, die an einem ersten Lagergehäuse 735 drehbar gelagert sind, gegenüber einem Fußteil 736 um eine in Laufrichtung des Koppelelements 7 ausgerichtete Kippachse um einen Winkel α von bevorzugt 5° bis 15° kippbar ist.

Das Fußteil 736 besteht dabei im Wesentlichen aus einem zweiten Lagergehäuse 737, den an dem zweiten Lagergehäuse 737 drehbar gelagerten Führungsrädern 733 und einer sich von dem zweiten Lagergehäuse 737 von einer dem Kopfteil 734 abgewandten Unterseite nach unten erstreckenden Führungsbolzen 739, an dem das Halteteil 71 befestigt ist.

Der Führungsbolzen 739 ist dabei in dem zweiten Lagergehäuse 737 drehfest, aber axial verschiebbar gehalten und im ersten Lagergehäuse 735 an einem sich in Laufrichtung des Koppelelements 7 ausgerichteten Bolzen738 gehalten. Dadurch kann das erste Lagergehäuse 735 gegenüber dem zweiten Lagergehäuse 737 verkippt werden.

Auch bei dieser Ausführungsvariante können die Ablagetische 2 im Bedarfsfall senkrecht zur Förderrichtung x der Ablagetische 2, durch die Kippfähigkeit der Führungselemente 73, verschwenkt werden.

Damit wird ermöglicht, dass die Ablagetische 2 im Bereich von Kurvenstücken 32 der Fördervorrichtung 1 zum Kurveninneren am jeweiligen geneigten Koppelelement 7 führbar sind und im Bereich eines geradlinigen Förderstreckenbereichs 33 der Schienenanordnung 3 horizontal geführt sind.

Das Führungselement 83 des Abstandselementes 8 ist bevorzugt entsprechend dem eben beschriebenen Führungselement 73 des Koppelelements 7 ausgeführt.

Dabei kann die Befestigung der Ablagetische 2 mit dem jeweiligen Halteteil 71 des Koppelelements 7 auch über eine starre Verbindung erfolgen, beispielsweise durch Verschrauben.

Zum Antrieb der Ablagetische 2 wird bevorzugt ein Reibrollenantrieb eingesetzt. Dazu weist jedes der Koppelelemente 7 Andruckflächen 721, 722 auf, an die elektrisch angetriebene Reibrollen zum Antrieb der Koppelelemente 7 andrückbar sind.

Diese Andruckflächen 721, 722 werden dabei bevorzugt durch unterhalb des Halteteils 71 befestigte oder angeformte Stege 72 ausgebildet. Die beispielsweise als Bleche ausgebildeten Stege 72 erstrecken sich dabei vertikal und parallel zur Förderrichtung x der Ablagetische 2.

Wie beispielsweise in Figur 3 gut zu erkennen ist, greifen die vordere und hintere Stirnkante der Stege 72 benachbarter Koppelelemente 7 schwenkbar zu einer horizontal und senkrecht zur Förderrichtung x ausgerichteten Drehachse ineinander.

Wie in den Figuren 2-4 gezeigt, ist zur Beabstandung benachbarter Koppelelemente 7 mit daran befestigten Ablagetischen 2 jeweils mindestens ein Abstandselement 8 in der zweiten Schienenbahn 5 angeordnet.

Dieses Abstandselement 8, an dem keine Ablagetische 2 befestigt sind, entspricht im Wesentlichen dem Aufbau der Koppelelemente 7, mit einem bevorzugt rohrförmig ausgebildeten Halteteil 81, an dem das Führungselement 83 mit Führungs- und Laufschienen sowie einem sich vertikal nach unten erstreckenden Steg 82 mit jeweiligen Andruckflächen, an denen die Reibrollen des Reibrollenantriebs (nicht gezeigt) angreifen können.

Um die Ablagetische 2 im Bereich einer Kurve 32 der Schienenanordnung 3 zum Kurveninneren geneigt am jeweiligen Koppelelement 7 zu führen, ist nach einer bevorzugten Ausführungsvariante die Auflagefläche 41 der ersten Schienenbahn 4 im Bereich der Kurve 32 gegenüber einem geradlinigen Förderstreckenbereich 33 überhöht ausgebildet, wie in Figur 7 dargestellt. Denkbar wäre prinzipiell auch anstelle der Erhöhung der ersten Schienenbahn 4 eine Absenkung der zweiten Schienenbahn 5.
Gut zu erkennen in den Figuren 7 und 8 ist auch die Neigung des Ablagetisches 2, ermöglicht durch die elastische Aufhängung des Ablagetisches 2 am Halteteil 71 mithilfe des elastischen Bolzen 92.

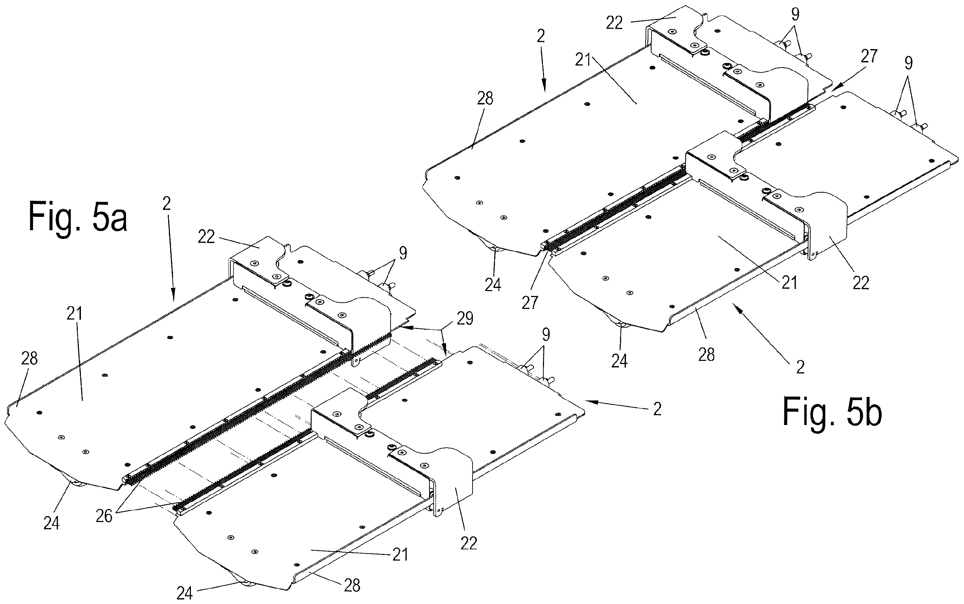

Wie in den Figuren 5a und 5b dargestellt, ist in einem Spalt 27 zwischen einander benachbarten Rändern 29 zweier an einem der Koppelelemente 7 befestigten Ablagetische 2 eine Schutzabdeckung 26 angebracht, mithilfe derer der Spalt 27 zumindest teilweise verdeckt ist. Die besonders bevorzugt als Bürste ausgebildete Schutzabdeckung 26 ist in dem hier gezeigten Ausführungsbeispiel an jedem der einander benachbarten Ränder 29 der Ablagetische 2 eine Bürste befestigt, wobei die Borsten der als Bürste ausgebildeten Schutzabdeckung 26 im zusammengebauten Zustand (gezeigt in Figur 5b) ineinander greifen und so verhindern, dass ein auf der Ablagefläche 21 der Ablagetische 2 aufgelegter Gegenstand durch diesen Spalt 27 hindurchrutschen kann.

Die Schutzabdeckung 26 ist in der hier gezeigten Ausführungsvariante auf die Ablagefläche 21 der Ablagetische 2 aufgesetzt und dient somit zusätzlich zur Verhinderung eines Wegrutschens von auf den jeweiligen Auflageflächen 21 der Ablagetische 2 aufgelegten Gegenständen.

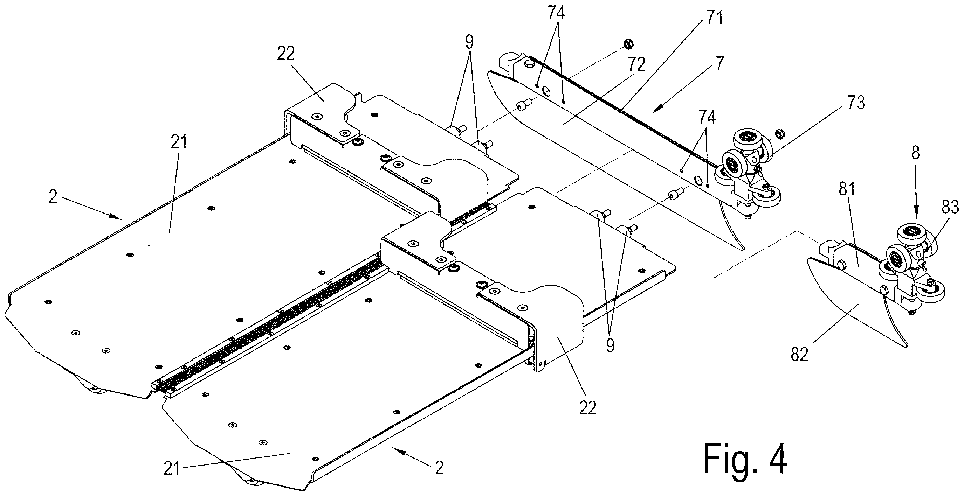

Zur Verhinderung eines Abrutschens der Gegenstände über die senkrecht zur Förderrichtung x verlaufenden Außenränder 28 zweier an einem Koppelelement 7 befestigten Ablagetische 2 sind diese Außenränder 28 bevorzugt nach oben umgebogen, wie beispielsweise in Figur 4 gezeigt ist.

### Bezugszeichenliste

- 1: Fördervorrichtung
- 2: Ablagetisch
- 3: Schienenanordnung
- 4: Schienenbahn
- 5: Schienenbahn
- 6: Entladestation
- 7: Koppelelement
- 8: Abstandselement
- 9: Verbindungselement

- 21: Auflage-/ Ablagefläche
- 22: Schieber
- 23: Unterseite
- 24: Rolle
- 25: Führungsrad
- 27: Spalt
- 28: Außenrand
- 29: Führungsschiene

- 31: Gestell
- 32: Kurvenstück
- 33: geradliniger Förderstreckenbereich

- 41: Schienenleiste / Auflagefläche

- 51: Schienenprofil
- 52: Laufbahn

- 71: Halteteil
- 72: Steg
- 73: Führungselement
- 74: Bohrung

- 81: Halteteil
- 82: Steg
- 83: Führungselement
- 91: Puffer
- 92: Bolzen

- 721: Andruckfläche
- 722: Andruckfläche

- 731: Führungsrad
- 732: Laufrad
- 733: Laufrad
- 734: Kopfteil
- 735: erstes Lagergehäuse
- 736: Fußteil
- 737: zweites Lagergehäuse
- 739: Führungsbolzen

- α: Kippwinkel

## Patentansprüche

1. Fördervorrichtung (1) zur Beförderung von Gegenständen, aufweisend
- mehrere Ablagetische (2), auf die die zu befördernden Gegenstände auflegbar sind,
- eine Schienenanordnung (3) mit einer ersten Schienenbahn (4) und einer parallel zu dieser verlaufenden zweiten Schienenbahn (5), entlang der die Ablagetische (2) verfahrbar angeordnet sind,
- wobei die Ablagetische (2) auf der ersten Schienenbahn (4) gleitend oder rollend gelagert sind,
- wobei in der zweiten Schienenbahn (5) mit einer Antriebseinrichtung antreibbare Koppelelemente (7) geführt sind, an denen die Ablagetische (2) befestigt sind,
- wobei jeder der Ablagetische (2) einen quer zur Bewegungsrichtung (x) der Ablagetische (2) bewegbaren Schieber (22) aufweist, mit dem die zu befördernden Gegenstände von dem jeweiligen Ablagetisch (2) herunterschiebbar sind,
**dadurch gekennzeichnet, dass**
- an jedem der Koppelelemente (7) wenigstens zwei der Ablagetische (2) elastisch befestigt sind,
- wobei die Koppelelemente (7) und die Ablagetische (2) über elastisch verformbare Verbindungselemente (9) miteinander verbunden sind,
- wobei die Verbindungselemente (9) zwei durch einen aus einem elastischen Material gebildeten Puffer (91) miteinander verbundene Bolzen (92) aufweisen, die in jeweiligen Bohrungen (74) der Ablagetische (2) und der Koppelelemente (7) gehalten sind.

2. Fördervorrichtung nach Anspruch 1, **dadurch gekennzeichnet, dass** jedes der Koppelelemente (7) ein an der zweiten Schienenbahn (5) verfahrbar gehaltenes Halteteil (71) aufweist, an der die wenigstens zwei der Ablagetische (2) befestigt sind.

3. Fördervorrichtung nach einem der vorstehenden Ansprüche, **dadurch gekennzeichnet, dass** jedes der Koppelelemente (7) Andruckflächen (721, 722) aufweist, an die elektrisch angetriebene Reibrollen zum Antrieb der Koppelelemente (7) andrückbar sind.

4. Fördervorrichtung nach Anspruch 3, **dadurch gekennzeichnet, dass** die Andruckflächen (721, 722) an unterhalb des Halteteils (71) befestigten oder angeformten Stegen (72) ausgebildet sind, wobei die Andruckflächen (721, 722) sich vertikal und parallel zur Förderrichtung (x) erstrecken.

5. Fördervorrichtung nach Anspruch 4, **dadurch gekennzeichnet, dass** die in Förderrichtung (x) vordere und hintere Stirnkante der Stege (72) benachbarter Koppelelemente (7) schwenkbar zu einer horizontalen und senkrecht zur Förderrichtung (x) ausgerichteten Drehachse ineinandergreifen.

6. Fördervorrichtung nach einem der vorstehenden Ansprüche, **dadurch gekennzeichnet, dass** die Ablagetische (2) im Bereich eines geradlinigen Förderstreckenbereichs (33) der Schienenanordnung (3) horizontal und im Bereich einer Kurve (32) der Schienenanordnung (3) zum Kurveninneren geneigt am jeweiligen Koppelelement (7) geführt sind.

7. Fördervorrichtung nach einem der vorstehenden Ansprüche, **dadurch gekennzeichnet, dass** die erste Schienenbahn (4) im Bereich einer Kurve (32) der Schienenanordnung (3) als Außenbahn mit größerem Krümmungsradius als der Krümmungsradius der als Innenbahn ausgebildeten zweiten Schienenbahn (5) ausgebildet und eine Auflagefläche (41) der ersten Schienenbahn (4) im Bereich der Kurve (32) gegenüber einem geradlinigen Förderstreckenbereich (33) überhöht ausgebildet ist.

8. Fördervorrichtung nach einem der vorstehenden Ansprüche, **dadurch gekennzeichnet, dass** ein Spalt (27) zwischen einander benachbarten Rändern (29) zweier an einem der Koppelelemente (7) befestigten Ablagetische (2) durch eine zumindest an einem der Ränder (29) angeordnete Schutzabdeckung (26) zumindest teilweise verdeckt ist.

9. Fördervorrichtung nach Anspruch 8, **dadurch gekennzeichnet, dass** die Schutzabdeckung (26) als Bürste ausgebildet ist.

10. Fördervorrichtung nach einem der vorstehenden Ansprüche, **dadurch gekennzeichnet, dass** zwischen benachbarten Koppelelementen (7) mit daran befestigten Ablagetischen jeweils mindestens ein Abstandselement (8) in der zweiten Schienenbahn (5) angeordnet ist.

11. Fördervorrichtung nach einem der vorstehenden Ansprüche, **dadurch gekennzeichnet, dass** jedes der Koppelelemente (7) wenigstens ein Führungselement (73) mit in jeweiligen Bahnen eines Hohlprofils der zweiten Schienenbahn (5) geführt Laufrädern (732) und Führungsrädern (731, 733) aufweist.

12. Fördervorrichtung nach Anspruch 11, **dadurch gekennzeichnet, dass** das Führungselement (73) ein Kopfteil (74), bestehend aus an einem ersten Lagergehäuse (735), an dem die Laufräder (732) und Führungsräder (731) drehbar gelagert sind, und ein um einen Winkel (a) kippbar an dem Kopfteil angeordnetes Fußteil (736) mit einem zweiten Lagergehäuse (737), an dem die Führungsräder (733) drehbar gelagert sind und an dem sich ein Führungsbolzen (739) von einer dem Kopfteil (734) abgewandten Unterseite nach unten erstreckt, an dem das Halteteil (71) befestigt ist, aufweist.

## Claims

1. A conveyor device (1) for conveying objects, comprising:
- multiple deposit tables (2), on which the objects to be conveyed can be deposited,
- a rail arrangement (3) comprising a first rail track (4) and a second rail track (5) extending parallel thereto, along which the deposit tables (2) are arranged so they are movable,
- wherein the deposit tables (2) are mounted in a sliding or rolling manner on the first rail track (4),
- wherein coupling elements (7), which are drivable using a drive unit and on which the deposit tables (2) are fastened, are guided in the second rail track (5),
- wherein each of the deposit tables (2) has a pusher (22) movable transversely to the movement direction (x) of the deposit tables (2), using which the objects to be conveyed can be pushed off of the respective deposit table (2),
**characterized in that**
- at least two of the deposit tables (2) are elastically fastened on each of the coupling elements (7),
- wherein the coupling elements (7) and the deposit tables (2) are connected to one another via elastically deformable connecting elements (9),
- wherein the connecting elements (9) have two bolts (92), which are connected to one another by a cushion (91) formed from an elastic material and are held in respective boreholes (74) of the deposit tables (2) and the coupling elements (7).

2. The conveyor device according to Claim 1, **characterized in that** each of the coupling elements (7) has a holding part (71), which is held so it is movable on the second rail track (5) and on which the at least two of the deposit tables (2) are fastened.

3. The conveyor device according to any one of the preceding claims, **characterized in that** each of the coupling elements (7) has pressing surfaces (721, 722), against which the electrically driven friction rollers for driving the coupling elements (7) can be pressed.

4. The conveyor device according to Claim 3, **characterized in that** the pressing surfaces (721, 722) are formed on webs (72) fastened or formed below the holding part (71), wherein the pressing surfaces (721, 722) extend vertically and parallel to the conveyor direction (x).

5. The conveyor device according to Claim 4, **characterized in that** the front and rear end edges of the webs (72) of adjacent coupling elements (7) in the conveyor direction (x) interlock so as to be pivotable in relation to a rotational axis aligned horizontally and perpendicularly to the conveyor direction (x).

6. The conveyor device according to any one of the preceding claims, **characterized in that** the deposit tables (2) are guided on the respective coupling element (7) horizontally in the region of a linear conveyor route region (33) of the rail arrangement (3) and inclined in relation to the curve interior in the region of a curve (32) of the rail arrangement (3).

7. The conveyor device according to any one of the preceding claims, **characterized in that** the first rail track (4) is formed in the region of a curve (32) of the rail arrangement (3) as an outer track having a greater radius of curvature than the radius of curvature of the second rail track (5) formed as an inner track and a support surface (41) of the first rail track (4) in the region of the curve (32) is formed elevated in relation to a linear conveyor route region (33).

8. The conveyor device according to any one of the preceding claims, **characterized in that** a gap (27) between edges (29) adjacent to one another of two deposit tables (2) fastened on one of the coupling elements (7) is at least partially covered by a protective cover (26) arranged at least on one of the edges (29).

9. The conveyor device according to Claim 8, **characterized in that** the protective cover (26) is formed as a brush.

10. The conveyor device according to any one of the preceding claims, **characterized in that** at least one spacer element (8) is arranged in the second rail track (5) in each case between adjacent coupling elements (7) having deposit tables fastened thereon.

11. The conveyor device according to any one of the preceding claims, **characterized in that** each of the coupling elements (7) has at least one guide element (73) having running wheels (732) and guide wheels (731, 733) guided in respective tracks of a hollow profile of the second rail track (5).

12. The conveyor device according to Claim 11, **characterized in that** the guide element (73) has a head part (74), consisting of a bearing housing (735), on which the running wheels (732) and guide wheels (731) are mounted so they are rotatable, and a foot part (736), which is arranged on the head part so it is tiltable by an angle (α), having a second bearing housing (737), on which the guide wheels (733) are mounted so they are rotatable and on which a guide bolt (739) extends downward from a lower side facing away from the head part (734), on which guide bolt the holding part (71) is fastened.

## Revendications

1. Dispositif de transport (1) pour le transport d'objets, présentant
- plusieurs tables de réception (2) sur lesquelles les objets à transporter peuvent être posés,
- un agencement de rails (3) comprenant une première voie à rail (4) et une deuxième voie à rail (5) s'étendant parallèlement à celle-ci, le long duquel les tables de réception (2) sont disposées mobiles,
- dans lequel les tables de réception (2) sont montées coulissantes ou roulantes sur la première voie à rail (4),
- dans lequel des éléments d'accouplement (7) pouvant être entraînés par un dispositif d'entraînement et auxquels les tables de réception (2) sont fixées sont guidés dans la deuxième voie à rail (5),
- dans lequel chacune des tables de réception (2) présente un coulisseau (22) mobile transversalement à la direction de déplacement (x) des tables de réception (2), avec lequel les objets à transporter peuvent être poussés de la table de réception respective (2),
**caractérisé en ce que**
- au moins deux des tables de réception (2) sont fixées à chacun des éléments d'accouplement (7),
- les éléments d'accouplement (7) et les tables de réception (2) étant reliés ensemble par l'intermédiaire d'éléments de liaison (9) déformables élastiquement,
- les éléments de liaison (9) présentant deux boulons (92) reliés ensemble par un tampon (91) formé d'un matériau élastique, lesquels boulons sont maintenus dans des alésages (74) respectifs des tables de réception (2) et des éléments d'accouplement (7).

2. Dispositif de transport selon la revendication 1, **caractérisé en ce que** chacun des éléments d'accouplement (7) présente une partie de maintien (71) qui est maintenue de manière mobile sur la deuxième voie à rail (5) et à laquelle sont fixées lesdites au moins deux des tables de réception (2).

3. Dispositif de transport selon l'une des revendications précédentes, **caractérisé en ce que** chacun des éléments d'accouplement (7) présente des surfaces de pression (721, 722) sur lesquelles peuvent être pressés des rouleaux de friction entraînés électriquement pour l'entraînement des éléments d'accouplement (7).

4. Dispositif de transport selon la revendication 3, **caractérisé en ce que** les surfaces de pression (721, 722) sont formées sur des traverses (72) fixées ou formées sous la partie de maintien (71), les surfaces de pression (721, 722) s'étendant verticalement et parallèlement à la direction de transport (x).

5. Dispositif de transport selon la revendication 4, **caractérisé en ce que** les bords d'extrémité avant et arrière dans la direction de transport (x) des traverses (72) d'éléments d'accouplement (7) adjacents s'engagent l'un dans l'autre de manière pivotante par rapport à un axe de rotation horizontal et orienté perpendiculairement à la direction de transport (x).

6. Dispositif de transport selon l'une des revendications précédentes, **caractérisé en ce que** les tables de réception (2) sont guidées le long de l'élément d'accouplement (7) respectif de manière horizontale dans la zone d'une partie rectiligne du parcours de transport (33) de l'agencement de rails (3) et inclinée vers l'intérieur de la courbe dans la zone d'une courbe (32) de l'agencement de rails (3).

7. Dispositif de transport selon l'une des revendications précédentes, **caractérisé en ce que** la première voie à rail (4), dans la zone d'une courbe (32) de l'agencement de rails (3), est conçue comme voie extérieure avec un rayon de courbure supérieur au rayon de courbure de la deuxième voie à rail (5) conçue comme voie intérieure, et une surface d'appui (41) de la première voie à rail (4) dans la zone de la courbe (32) est surélevée par rapport à une partie rectiligne du parcours de transport (33).

8. Dispositif de transport selon l'une des revendications précédentes, **caractérisé en ce qu'**une fente (27) entre les bords (29) adjacents de deux tables de réception (2) fixées à l'un des éléments d'accouplement (7) est recouverte au moins partiellement par un capot de protection (26) disposé au moins sur l'un des bords (29).

9. Dispositif de transport selon la revendication 8, **caractérisé en ce que** le capot de protection (26) est réalisé sous la forme d'une brosse.

10. Dispositif de transport selon l'une des revendications précédentes, **caractérisé en ce que** chaque fois au moins un élément d'espacement (8) est fois disposé dans la deuxième voie à rail (5) entre des éléments d'accouplement (7) adjacents auxquels sont fixées des tables de réception.

11. Dispositif de transport selon l'une des revendications précédentes, **caractérisé en ce que** chacun des éléments d'accouplement (7) présente au moins un élément de guidage (73) muni de roues de roulement (732) et de roues de guidage (731, 733) guidées dans des voies respectives d'un profil creux de la deuxième voie à rail (5).

12. Dispositif de transport selon la revendication 11, **caractérisé en ce que** l'élément de guidage (73) présente une partie tête (74) constituée d'un premier logement de palier (735) sur lequel les roues de roulement (732) et les roues de guidage (731) sont montées tournantes, et une partie pied (736) disposée sur la partie tête de façon à pouvoir pivoter d'un angle (a), avec un deuxième logement de palier (737) sur lequel les roues de guidage (733) sont montées tournantes et sur lequel un boulon de guidage (739) s'étend vers le bas à partir d'un côté inférieur éloigné de la partie tête (734), auquel la partie de maintien (71) est fixée.
